## Europäisches Patentamt
## European Patent Office
## Office européen des brevets

(19)

(11) Numéro de publication: **0 043 051**
**B1**

(12) **FASCICULE DE BREVET EUROPEEN**

(45) Date de publication du fascicule du brevet: **15.02.84**

(51) Int. Cl.³: **A 44 B 15/00**

(21) Numéro de dépôt: **81104747.1**

(22) Date de dépôt: **22.06.81**

(54) Porte-clés perfectionné.

(30) Priorité: **27.06.80 FR 8014464**

(43) Date de publication de la demande:
**06.01.82 Bulletin 82/1**

(45) Mention de la délivrance du brevet:
**15.02.84 Bulletin 84/7**

(84) Etats contractants désignés:
**AT BE CH DE IT LI LU NL SE**

(56) Documents cités:
**DE - A - 2 852 039**
**FR - A - 596 975**
**FR - A - 2 002 961**
**FR - A - 2 362 984**
**FR - A - 2 376 595**
**US - A - 2 527 457**

(73) Titulaire: **Rousseau, Jean-Pierre**
**98, rue de Miromesnil**
**F-75008 Paris (FR)**

(72) Inventeur: **Rousseau, Jean-Pierre**
**98, rue de Miromesnil**
**F-75008 Paris (FR)**

(74) Mandataire: **Casalonga, Axel et al,**
**BUREAU D.A. CASALONGA OFFICE JOSSE &**
**PETIT Baaderstrasse 12-14**
**D-8000 München 5 (DE)**

Courier Press, Leamington Spa, England.

Porte-clés perfectionné

L'invention concerne les porte-clés ou anneaux de clés.

La plupart des porte-clés connus, malgré un aspect qui se veut attractif, sont conçus en tant qu'article de quincallerie à l'aide de pièces métalliques rudimentaires dont l'assemblage est délicat et qui laisse subsister un grand nombre d'aspérités agressives susceptibles de percer les poches. Ils sont le plus souvent d'une manipulation difficile, faisant appel aux ongles de l'opérateur qu'ils risquent de briser, et le verrouillage fait généralement appel à l'élasticité d'au moins une pièce métallique peu élastique et peu précise dont la dureté est excessive en début d'utilisation et devient insuffisante au bout d'un certain temps d'utilisation. Naturellement, il existe aussi des porte-clés conçus en tant que pièce mécanique précise ou en tant que pièce d'orfévrerie, mais ils sont alors extrêmement onéreux et très lourds ce qui en interdit un emploi généralisé.

Le but de l'invention est d'éliminer les inconvénients précédents, c'est-à-dire de réaliser un portz-clés simple et économique, mais néanmois efficace, robuste et d'un aspect net et non agressif, en même temps que d'une manipulation aisée.

L'invention consiste à combiner un coulisseau susceptible de coulisser longitudinalement dans un fourreau métallique à paroi mince, avec un anneau ouvert rigide dont l'ouverture est limitée par deux becs internes se faisant face, une extrémité au moins de l'ensemble allongé constitué par le coulisseau et le fourreau comportant sur chaque bord une ouverture latérale dissymétrique ou une encoche pratiquée dans le fourreau de manière à permettre l'introduction des deux becs internes de l'anneau depuis une des faces du fourreau, avec en outre une nervure d'arrêt sur le coulisseau du côté de ladite face et disposée longitudinalement de manière à empêcher l'extraction de l'anneau desdites ouvertures lorsque le coulisseau est entièrement logé dans le fourreau, tout en permettant son extraction après coulissement du coulisseau dans une position telle que les neuvures dégagent lesdites ouvertures.

Le coulisseau est de préférence en matière plastique moulée avec à chaque extrémité une tête extérieure dont la section remplit entièrement celle du fourreau et se termine par une face d'extrémité affleurant la section droite du fourreau dans la position de verrouillage. Le fourreau est de préférence à section ouverte en forme de C tandis que le coulisseau comporte une face qui affleure le fourreau à l'intérieur de l'ouverture. Le coulisseau peut avantageusement comporter un creux débouchant dans sa grande face non apparente en position fermée de manière à constituer un étui.

D'autres particularités de l'invention apparaîtront dans la description qui va suivre d'un mode de réalisation pris comme exemple et représenté sur le dessin annexé, sur lequel:

la fig. 1 est une vue d'ensemble de face du porte-clé;

la fig. 2 représente à plus grande échelle une section selon II—II de la fig. 1 sans l'anneau;

la fig. 3 représente également à grande échelle une vue de côté du coulisseau seul;

la fig. 4 est une vue partielle en élévation également à grande échelle d'une extrémité de l'ensemble du fourreau et du coulisseau en position déverrouillée.

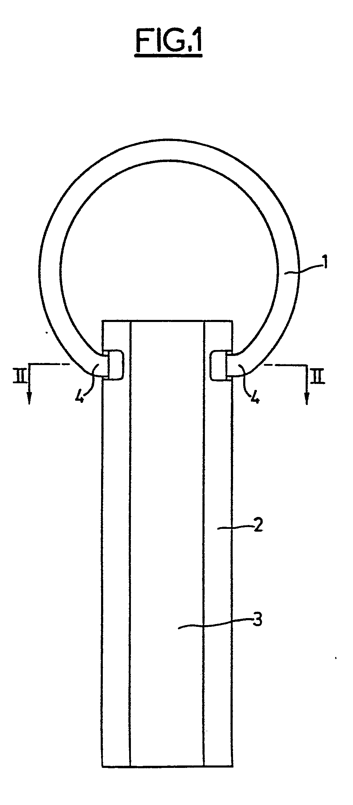

Comme on le voit sur la fig. 1, le porte-clés se compose essentiellement de trois pièces qui sont un anneau ouvert rigide 1, un fourreau 2 et un coulisseau 3 coulissant à l'intérieur de ce fourreau.

L'anneau rigide 1, de préférence métallique, comporte une large ouverture encadrée par deux becs 4 se faisant face et constitués de préférence par de courtes parties cylindriques rectilignes situées dans le prolongement l'une de l'autre. On entend par anneau rigide une pièce dont aucune élasticité n'est exigée et qui peut donc être aussi robuste que nécessaire.

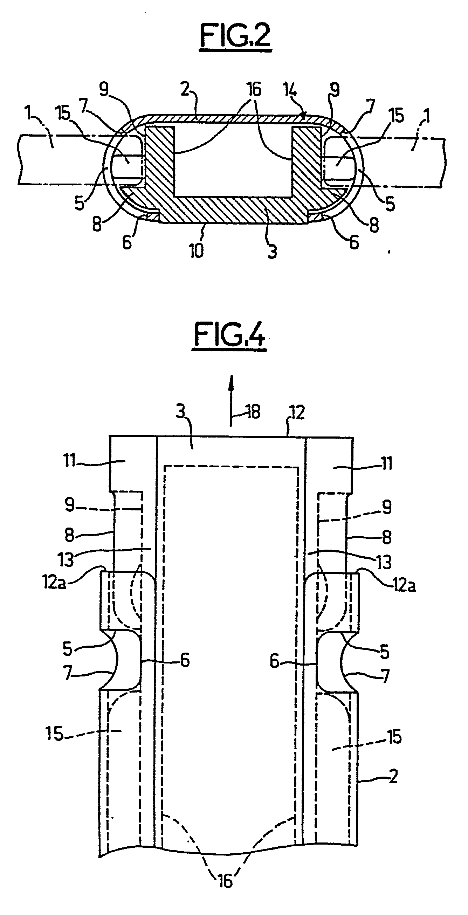

Le fourreau 2 à paroi métallique mince pourrait être de forme tubulaire, mais pour des raisons de commodité de fabrication et de manipulation il est de préférence à section ouverte, avec des formes arrondies évitant tout angle vif, par exemple la section représentée sur la fig. 2 formée par deux demi-cercles raccordés par les tangentes. Une de ces tangentes est presque entièrement éliminée par l'ouverture centrale ménagée dans la face correspondante.

Au voisinage d'une extrémité au moins ce foureau comporte des ouvertures 5, constituées soit par des échancrures débouchant dans l'ouverture centrale de la section, soit de préférence, comme représenté sur les figures, des ouvertures à contour fermé pour éviter de laisser subsister au voisinage de cette ouverture centrale la moindre aspérité agressive. Dans ce dernier cas, chaque ouverture 5 est de préférence limitée, en direction de l'ouverture centrale du fourreau, par un bord 6 sensiblement rectiligne et parallèle à l'axe, et la distance entre les deux bords 6 parallèles des deux ouvertures 5 est sensiblement égale à la distance entre les faces terminales en regard des deux becs 4 de l'anneau 1, ceci de manière à permettre l'introduction de l'anneau par un déplacement perpendiculaire au plan des fig. 1 et 4. Au contraire, le bord opposé 7 de chaque ouverture 5 est beaucoup plus débordant pour assurer une retenue de ces becs 4 au niveau de l'autre face du fourreau. L'emplacement de ces becs 4 est esquissé en trait mixte sur la fig. 4.

Le coulisseau 3, réalisé de préférence en matière moulée, est susceptible de coulisser longitudinalement à l'intérieur du fourreau 2, et il comporte à l'endroit de chaque ouverture 5 du fourreau une nervure 8 qui vient assurer la retenue des becs 4 du côté des bords 6. Par coulissement axial du coulisseau à l'intérieur du fourreau, ces nervures 8 dégagent au contraire ces becs pour permettre l'extraction de l'anneau perpendiculairement au plan des fig. 1 et 4.

Dans toute la zone de chaque côté du coulisseau intéressée par la position des ouvertures 5 et des becs 4, le coulisseau est limité de préférence par des faces planes parallèles 9 dont l'écartement correspond à la distance entre les bords 6, c'est-à-dire à l'ouverture de l'anneau 1. Ceci pour faciliter les mouvements d'introduction et d'extraction de l'anneau lorsque le coulisseau est en position déverrouillée dans son fourreau et également pour empêcher la rotation de l'anneau sur lui-même dans la position verrouillée.

Le coulisseau 3 comporte une légère saillie dans toute l'étendue de l'ouverture centrale du fourreau 2 de manière que sa face plane 10 vienne affleurer le fourreau, c'est-à-dire se placer selon la tangente commune aux deux bords demi-cylindriques du fourreau, ceci de manière à avoir un aspect net sans aucune arête d'accrochage. De la même façon, à chaque extrémité du coulisseau 3, celui-ci se termine par une tête 11 remplissant entièrement la section d'extrémité du fourreau et se terminant par une face d'extrémité 12 qui affleure exactement la section droite 12a de l'extrémité du fourreau lorsque le coulisseau est en position verrouillée, c'est-à-dire entièrement rentré à l'intérieur du fourreau.

Pour assurer un coulissement doux du coulisseau 3 dans le fourreau 2, et ceci malgré les bavures intérieures qui peuvent se présenter dans les ouvertures 5 et dans les sections d'extrémité 12a du fourreau, et qu'il est toujours difficile d'éviter complétement, seule la partie centrale du coulisseau, c'est-à-dire celle qui ne sort jamais de l'intervalle entre les ouvertures 5 d'un côté, et l'extrémité du fourreau du côté opposé, assure le contact à glissement, avec un léger serrage élastique entre le coulisseau et le fourreau, toutes les autres parties du coulisseau étant légèrement dégagées en retrait par rapport à la surface interne du fourreau pour éviter tout acrochage par les bavures éventuelles. Ce contact de glissement dans la zone centrale peut en particulier être assuré par des plages étroites 13 de part et d'autre de l'ouverture centrale du fourreau, par des plages d'appui 14 du côté opposé, et enfin par des nervures latérales 15 s'étendant dans le plan médian du coulisseau, ces nervures faisant saillie au-delà d'un plan qui prolonge le plan 9 précédent.

Le coulisseau 3 étant de préférence réaliasé en matière plastique moulée, pour une plus grande facilité de fabrication il est préférable de le réaliser sous la forme d'une pièce creuse en ménageant en son centre un creux 16 sensiblement parallélépipédique dont les faces latérales s'étendent entre les plages 14 et parallèlement aux faces externes 9, dont les faces d'extrémité s'étendent parallélement aux faces d'affleurement 12, et dont le fond s'étend parallèlement à la face d'affluerement 10, ce creux débouchant par conséquent dans la face du coulisseau qui est refermée par le dos plein du fourreau 2. Dans ce cas, ce creux parallélépipédique 16 se trouve démasqué en partie lors du mouvement de déverrouillage, et peut être démasqué en totalité après retrait de l'anneau, de telle manière que l'ensemble peut constituer un étui pour le logement d'objets ou de produits quelconque. Le coulisseau 3 peut éventuellement être transparent.

On remarque que, lors du mouvement de coulissement du coulisseau 3 dans le fourreau 2 pour passer de la position verrouillée de la fig. 1 à la position déverrouillée de la fig. 4, les nervures latérales de guidage 15 viennent buter sur les becs internes 4 de l'anneau. Dans le mouvement inverse les nervures 8 viennent reprendre leur position de verrouillage des becs 4, et l'ensemble peut à son tour être verrouillé dans la position de verrouillage en munissant chaque face plane 9 d'un bossage en saillie 17 près de l'extrémité de chaque nervure 8 qui agit sur le bec 4 lors du verrouillage. De cette manière, les deux bossages opposés produisent une sorte d'encliquetement élastique au passage des deux becs tout en libérant ensuite ceux-ci pour que l'anneau pivote librement.

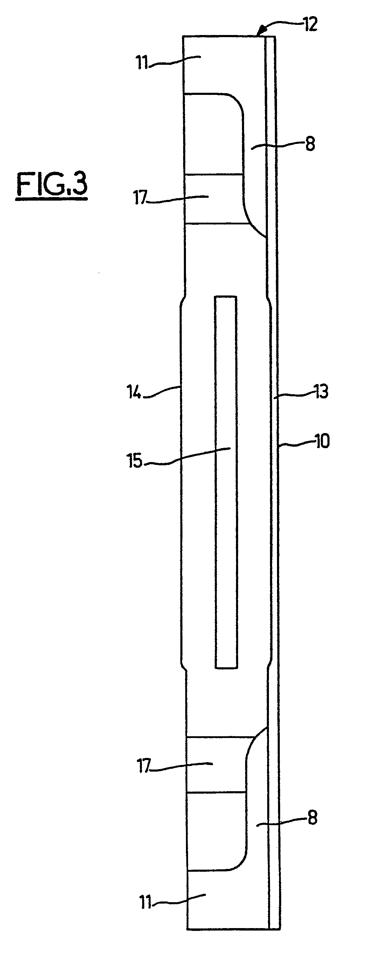

Dans le mode de réalisation représenté sur la fig. 3, le coulisseau peut être réalisé d'une façon entièrement symétrique en prévoyant une disposition similaire à son autre extrémité de manière à éviter toute précaution au moment du montage, aussi bien en fabrication que pour l'utilisateur qui serait amené à démonter entirèrement les trois pièces, par exemple pour l'utilisation en étui.

Dans l'exemple représenté, les nervures 8 se raccordent par leur extrémité opposée au bossage 17 avec la tête 11 correspondante, ce qui revient à dire que le mouvement du coulisseau qui correspond au déverrouillage s'opère dans le sens de la flèche 18. Ceci s'obtient très facilement en prenant le fourreau 2 dans la main et en poussant dans le sens de la flèche 18 à l'aide du pouce sur la partie du fourreau située dans l'ouverture centrale du fourreau. Il est possible naturellement de prévoir dans l'extrémité de la face 10 des aspérités ou des stries facilitant l'adhérence du doigt. Il serait cependant possible également de prévoir la disposition inverse, c'est-à-dire avoir l'extrémité des nervures 8 raccordée avec l'extrémité correspondante des nervures centrales 15, l'extrémité opposée de ces nervures 8, voisine des bossages 17, étant alors dégagée des têtes 11 pour laisser le passage aux becs 4, et le mouvement de déverrouillage s'obtenant alors par une manoeuvre dans le sens opposé à la flèche 18.

En définitive, on voit que le porte-clés selon l'invention, constitué exclusivement de trois pièces de forme simple et de fabrication relativement économique, permet un assemblage extrêmement simple, une manoeuvre tout à fait aisée et présente une grande robustesse en même temps qu'un aspect extérieur absolument net, débarrassé de toute arête ou aspérité agressive.

## Revendications

1. Porte-clés caractérisé par le fait qu'il est constitué exclusivement par un anneau ouvert rigide (1) dont l'ouverture est encadrée par deux becs (4) en regard, un fourreau métallique (2) à paroi mince muni au moins à proximité d'une extrémité de deux encoches ou ouvertures latérales (5) de forme dissymétrique permettant l'introduction transversale desdits becs (4) de l'anneau (1) depuis un côté seulement, et un coulisseau (3) susceptible de coulisser à l'intérieur du fourreau (2) et comportant à l'endroit de chacune desdites ouvertures (5) des nervures de verrouillage (8) situées du côté des ouvertures (5) par où se fait l'introduction de l'anneau (1) et masquant partiellement ces ouvertures (5) pour empêcher l'extraction de cet anneau (1) lorsque le coulisseau (3) est entièrement logé à l'intérieur du fourreau (2), tandis qu'un mouvement de coulissement du coulisseau dans le fourreau déplace ces nervures (8) dans une position dans laquelle elles dégagent ces ouvertures (5).

2. Porte-clés selon la revendication 1, caractérisé par le fait que le fourreau est à section en C de forme plate avec ouverture centrale dans une des faces, et que le coulisseau (3) est en matière plastique moulée et se trouve limité, dans sa partie venant se loger à l'intérieur de ladite ouverture centrale du fourreau (2), par une face (10) venant affleurer la surface extérieure du fourreau (2).

3. Porte-clés selon l'une quelconque des revendications 1 et 2, caractérisé par le fait que son coulisseau (3) comporte à chaque extrémité une tête (11) remplissant sensiblement toute la section intérieure du fourreau (2) et limitée extérieurement par une face (12) affleurant la section droite (12a) d'extrémité du fourreau (2).

4. Porte-clés selon l'une quelconque des revendications précédentes, caractérisé par le fait que le contact de coulissement entre le coulisseau (3) et le fourreau (2) est limité à une zone centrale réduite dans le sens de la longueur de manière que dans les mouvements du coulisseau (3) par rapport au fourreau (2) qui assurent normalement le verrouillage et le déverrouillage de l'anneau (1), cette zone ne vienne jamais rencontrer les bavures intérieures éventuelles qui peuvent se présenter au droit des ouvertures latérales (5) et des sections droites (12a) d'extrémité du fourreau, toutes les autres parties du coulisseau situées en dehors de cette zone centrale étant dégagées légèrement en retrait de la surface intérieure du fourreau (2).

5. Porte-clés selon la revendication 4, caractérisé par le fait que lesdites zones de contact sont limitées à deux plages latérales (13) entourant l'ouverture centrale du fourreau (2), à deux plages correspondantes (14) sur la face opposée du coulisseau (3) et à deux nervures médianes latérales (15).

6. Porte-clés selon les revendications 2 et 5 prises dans leur ensemble, caractérisé par le fait que le coulisseau (3) comporte un creux (16) sensiblement parallélépipédique s'étendant entre lesdites plages latérales (14, 13), entre les faces d'extrémité (12) et débouchant sur la face du fourreau (2) opposée à ladite ouverture centrale.

7. Porte-clés selon l'une quelconque des revendications précédentes, caractérisé par le fait que les faces (9) du coulisseau (3) comportent au voisinage de l'extrémité des nervures de verrouillage (8) située en direction de l'ouverture latérale (5) correspondante dans la position de déverrouillage (fig. 4), un bossage (17) en saillie assurant un verrouillage en position verrouillée du coulisseau dans le fourreau (fig. 1) par action sur les becs (4) de l'anneau (1).

## Claims

1. A keyholder, characterized in that it consists exclusively of a rigid open ring (1) the opening of which is bounded by two noses (4) facing each other, a thin-walled metal sheath (2) provided at least close to one end with two lateral openings or notches (5) of asymmetrical shape enabling the said noses (4) of the ring (1) to be inserted transversally from one side only, and a slide (3) able to slide inside the sheath (2) and comprising locking ribs (8) at the location of each of the said openings (5) and situated on the side of the openings (5) from which the ring (1) is inserted and partly masking these openings (5) to prevent withdrawal of this ring (1) when the slide (3) is completely housed inside the sheath (2), whilst a sliding movement of the slide inside the sheath moves these ribs (8) into a position in which they free these openings (5).

2. The keyholder according to claim 1, characterized in that the sheath has a flat C-shaped cross-section with a central opening in one of the faces and in that the slide (3) is made of moulded plastics material and is bound, in the portion thereof moving to be housed inside the said central opening of the sheath (2), by a face (10) coming flush with the outside surface of the sheath (2).

3. The keyholder according to either of claims 1 or 2, characterized in that its slide (3) comprises a head (11) at each end filling virtually the whole inside cross-section of the sheath (2) and bound on the outside by a face (12) flush with the sheath end cross-section (12a).

4. The keyholder according to any of the preceding claims, characterized in that the sliding contact between the slide (3) and the sheath (2) is limited to a middle zone which is reduced in the lengthwise direction so that, in the movements of the slide (3) with respect to the sheath (2) which normally lock and unlock the ring (1), this zone never encounters any internal burrs which may occur level with the lateral openings (5) and the sheath end cross-sections (12a), all the other portions of the slide located outside this central zone being slightly relieved back from the inside surface of the sheath (2).

5. The keyholder according to claim 4, characterized in that the said contact zones are limited to two lateral surfaces (13) surrounding the central opening of the sheath (2), to two corresponding surfaces (14) on the opposite face of the slide (3) and to two lateral middle ribs (15).

6. The keyholder according to claims 2 and 5 taken together, characterized in that the slide (3) comprises a roughly parallelepiped recess (16) running between the end faces (12), between the said lateral surfaces (14, 13), and opening out onto the face of the sheath (2) opposite the said central opening.

7. The keyholder according to any of the preceding claims, characterized in that the faces (9) of the slide (3) comprise, near to the end of the locking ribs (8) located in the direction of the corresponding lateral opening (5) in the unlocking position (fig. 4), a projecting boss (17) locking the slide in the locked position in the sheath (fig. 1) by acting on the noses (4) of the ring (11).

**Patentansprüche**

1. Schlüsselring, dadurch gekennzeichnet, daß er ausschließlich aus einem offenen starren Ring (1), dessen Öffnung von zwei einander gegenüberstehenden Nasen (4) begrenzt ist, sowie einer dünnwandigen Metallhülse (2), die in der Nähe mindestens eines der Enden mit zwei seitlichen Aussparungen oder Öffnungen (5) von unsymmetrischer Form versehen ist, die die seitliche Einführung der genannten Nasen (4) des Ringes (1) nur von einer Seite aus erlauben, und einem Führungsblock (3) besteht, der sich im Inneren der Hülse (2) verschieben läßt und am Ort jeder der Öffnungen (5) Blokkierungsrippen (8) aufweist, die sich in der Nähe der Öffnungen (5) zum Einführen des Ringes (1) befinden und diese Öffnungen (5) teilweise verdecken, um das Herausziehen des Ringes (1) für den Fall zu verhindern, daß der Führungsblock (3) vollständig in die Hülse (2) eingeschoben ist, während eine Gleitbewegung des Führungsblocks in der Hülse die Rippen (8) in eine Position bringt, in der sie die Öffnungen (5) freilegen.

2. Schlüsselring nach Anspruch 1, dadurch gekennzeichnet, daß die Hülse im Querschnitt die Form eines flachgedrückten C mit zentraler Öffnung in einer Fläche hat, und daß der Führungsblock (3) aus Kunststoff gepreßt ist und an dem Abschnitt, der sich innerhalb der genannten zentralen Öffnung der Hülse (2) befindet, eine Stirnfläche (10) besitzt, die bündig mit der Außenseite der Hülse (2) verläuft.

3. Schlüsselring nach Anspruch 1 oder 2, dadurch gekennzeichnet, daß der Führungsblock (3) an seinen beiden Enden jeweils einen Kopf (11) aufweist, der praktisch den gesamten Innenquerschnitt der Hülse (2) ausfüllt und nach außen durch eine Fläche (12) begrenzt ist, die bündig mit dem Querschnitt (12a) des Endes der Hülse verläuft.

4. Schlüsselring nach einem der vorhergehenden Ansprüche, dadurch gekennzeichnet, daß der Verschiebungskontakt zwischen dem Führungsblock (3) und der Hülse (2) beschränkt ist auf eine zentrale Zone, die in Längsrichtung in der Weise verkürzt ist, daß diese Zone bei den Verschiebungen des Führungsblocks (3) gegenüber der Hülse (2), die normalerweise die Verriegelung und die Freigabe des Ringes (1) herbeiführen, niemals die an den seitlichen Öffnungen (5) und den Querschnitten (12a) an dem Hülsenende etwa auftretenden Innengrate erreicht, und daß alle anderen außerhalb dieser zentralen Zone befindlichen Teile des Führungsblocks gegenüber der Innenseite der Hülse (2) etwas zurückspringen.

5. Schlüsselring nach Anspruch 4, dadurch gekennzeichnet, daß die genannten Kontaktzonen auf zwei seitliche Bereiche (13), die die zentrale Öffnung der Hülse (2) umgeben, zwei entsprechende Bereiche (14) an der gegenüberliegenden Fläche des Führungsblocks (3) und zwei seitliche Mittelrippen (15) beschränkt sind.

6. Schlüsselring nach den zusammengefaßten Ansprüchen 2 und 5, dadurch gekennzeichnet, daß der Führungsblock (3) einen im wesentlichen quaderförmigen Hohlraum (16) aufweist, der zwischen den genannten seitlichen Bereichen (14, 13) zwischen den Endflächen (12) verläuft und sich zu der der genannten zentralen Öffnung gegenüberliegenden Seite der Hülse (2) öffnet.

7. Schlüsselring nach einem der vorhergehenden Ansprüche, dadurch gekennzeichnet, daß an den Flächen (9) des Führungsblocks (3) neben dem in Entriegelungsposition (Fig. 4) zu de seitlichen Offnung (5) gerichteten Ende der Blockierungsrippe (8) ein vorspringender Buckel (17) vorgesehen ist, der durch Einwirkung auf die Nasen (4) des Ringes (1) eine Sperrung des Gleitblocks in der Hülse in seinem Verriegelungszustand bewirkt (Fig. 1).

# FIG.1

## FIG.2

## FIG.4

FIG.3